# EUROPÄISCHE PATENTANMELDUNG

(11) **EP 3 836 327 A1**
(43) Veröffentlichungstag der Anmeldung: **16.06.2021**
(21) Anmeldenummer: 20211485.6
(22) Anmeldetag: 03.12.2020
(51) Int. Cl.: H02G 9/02, H02G 9/10, G02B 6/44, G02B 6/50

(54) **VERWENDUNG ZUM ANBINDEN EINER DATENNUTZER- ODER DATENVERTEILERSTELLE**

(30) Priorität: 10.12.2019 DE 102019133706
(71) Anmelder: Hauff-Technik GmbH & Co. KG, 89568 Hermaringen (DE)
(72) Erfinder: SCHMID, Jörg, 89129 Langenau (DE); SCHEURING, Horst, 89452 Herbrechtingen (DE); KURZ, Ralf, 89537 Giengen (DE)
(74) Vertreter: König Szynka Tilmann von Renesse Patentanwälte Partnerschaft mbB

(57) **Zusammenfassung**

Verwendung eines Datenkabels (40) zum Anbinden einer Datennutzer- oder Datenverteilerstelle (16) an ein Anschlussgehäuse (2), wobei das Anschlussgehäuse (2) eine Wand (51) aufweist, die einen Innenraum (4) begrenzt, und in einen Boden (50) eingebaut ist, und wobei die Datennutzer- oder Datenverteilerstelle (16) eine Wand (72) aufweist, die einen Innenraum (73) begrenzt, und wobei das Datenkabel (40) vorkonfektioniert ist, nämlich an zumindest einem Ende (40.1, 40.2) mit einem Steckerteil (43, 44) ausgestattet und mit einer Montagehilfseinrichtung (50, 51) versehen ist, bei welcher Verwendung das vorkonfektionierte Datenkabel (40) an das Anschlussgehäuse (2) oder die Datennutzer- oder Datenverteilerstelle (16) angebunden wird, nämlich das zumindest eine mit dem Steckerteil (43, 44) ausgestattete Ende (40.1, 40.2) des Datenkabels (40) in den entsprechenden Innenraum (4, 73) hineinverlegt wird und die Montagehilfseinrichtung (50, 51) an der diesen Innenraum (4, 73) begrenzenden Wand (51, 72) befestigt wird.

## Beschreibung

Die vorliegende Erfindung betrifft die Verwendung eines Datenkabels zum Anbinden einer Datennutzer- oder Datenverteilerstelle.

Wie nachstehend im Einzelnen diskutiert, kann es sich bei der Datennutzer- oder Datenverteilerstelle bspw. um ein Gebäude handeln, etwa ein Wohn- oder Bürogebäude. Dieses wird an ein Datenkabelnetz angebunden, z. B. im Zuge des Netzausbaus an ein Glasfasernetz.

Der vorliegenden Erfindung liegt das technische Problem zugrunde, eine vorteilhafte Verwendung zur Anbindung einer Datennutzer- oder Datenverteilerstelle anzugeben.

Dies wird erfindungsgemäß mit der Verwendung gemäß Anspruch 1 gelöst, die ein Anschlussgehäuse und ein vorkonfektioniertes Datenkabel zum Gegenstand hat. Das Anschlussgehäuse begrenzt einen Innenraum und ist bzw. wird in den Boden eingebaut, vorzugsweise solchermaßen, dass dieser Innenraum von oben durch eine Öffnung im Anschlussgehäuse zugänglich bleibt. Dabei ist das Anschlussgehäuse außerhalb der Datennutzer- oder Datenverteilerstelle angeordnet, also bspw. im Falle eines Gebäudes außerhalb von dessen Gebäudegrundfläche (z. B. im Garten oder auf der Straße, etwa am Gehweg). Das so in den Boden, also bspw. das Erdreich oder den Straßenaufbau eingebaute Anschlussgehäuse stellt einen Zugangspunkt dar, der die Anbindung an das Netz, also an eine Datenkabel-Verzweigungsstelle bzw. einen übergeordneten Knotenpunkt, vereinfachen kann. Der vorliegende Gegenstand richtet sich speziell auf die Verbindung zwischen Anschlussgehäuse und Datennutzer- oder Verteilerstelle, die mit dem vorkonfektionierten Datenkabel erfolgt.

Das Datenkabel ist an mindestens einem seiner beiden in Längsrichtung entgegengesetzten Enden mit einem Steckerteil ausgestattet, und ferner ist es mit einer Montagehilfseinrichtung versehen. Im Zuge der Montage wird das mit dem Steckerteil vorkonfektionierte Ende in einen Innenraum hineinverlegt, entweder in den Innenraum des Anschlussgehäuses oder einen Innenraum der Datennutzer- oder Datenverteilerstelle. Mit der Montagehilfseinrichtung, die vormontiert auf dem Datenkabel angeordnet ist, wird dieses dann an der den entsprechenden Innenraum begrenzenden Wand befestigt. Die Montagehilfseinrichtung kann an der Wand des Anschlussgehäuses oder der Wand der Datennutzer- oder Verteilerstelle befestigt werden, bspw. auszugssicher an bzw. in der Wand gehalten sein (wobei das Datenkabel die Montagehilfseinrichtung durchsetzt).

Ein zum vorliegenden Gegenstand alternativer Ansatz würde bspw. dahin gehen, zunächst ein Leerrohr zwischen dem Anschlussgehäuse und der Datennutzer- oder Datenverteilerstelle zu verlegen, und dieses an der Wand des Anschlussgehäuses und der Wand der Datennutzer- oder Datenverteilerstelle zu befestigen. Das Datenkabel würde dann erst im Anschluss durch das Leerrohr verlegt, was noch ohne Steckerteil erfolgen müsste, um ein Verheddern des Datenkabels zu verhindern. Das Steckerteil könnte dann also erst nachträglich angesetzt werden, was z. B. im Falle eines Glasfaserkabels das Vorhalten eines Spleißgeräts erfordert. Demgegenüber geht der vorliegende Ansatz dahin, das Datenkabel nicht nur mit dem Steckerteil, sondern auch bereits mit der Montagehilfseinrichtung auszustatten, was die bei der Verlegung vorzunehmenden Montageschritte und auch den Werkzeugaufwand reduzieren kann. Aufgrund der Vorkonfektionierung ist zwar gegebenenfalls die Anpassbarkeit an die Gegebenheiten vor Ort etwas geringer, etwa an den Abstand zwischen Anschlussgehäuse und Datennutzer- oder Datenverteilerstelle, was Überlängen und damit überschüssiges Material ergeben kann. In der Gesamtschau überwiegen jedoch die Vorteile der vereinfachten Handhabung.

Bevorzugte Ausgestaltungen finden sich in den abhängigen Ansprüchen und der gesamten Offenbarung, wobei in der Darstellung der Merkmale nicht immer im Einzelnen zwischen den unterschiedlichen Anspruchskategorien unterschieden wird; jedenfalls implizit ist die Offenbarung stets sowohl auf Verfahrens- bzw. Verwendungsaspekte als auch hinsichtlich entsprechender Vorrichtungsmerkmale zu lesen. Werden bspw. die Vorteile einer bestimmten funktionalen oder geometrischen Ausgestaltung in der Anwendung beschrieben, ist dies zugleich als Offenbarung der entsprechenden Verwendung zu lesen, und umgekehrt.

Bevorzugt wird mit dem vorkonfektionierten Datenkabel eine Datennutzerstelle an das Anschlussgehäuse angebunden, insbesondere ein Gebäude, z. B. ein Wohn- und/oder Bürogebäude. Deshalb wird der Einfachheit halber nachstehend auf ein "Gebäude" Bezug genommen, ist die entsprechende Offenbarung aber ohne ausdrücklich gegenteilige Angabe zugleich auch auf eine Datenverteilerstelle zu lesen, bspw. eine Antenneneinheit, insbesondere eine Mobilfunkstation. Bei einer solchen können sich mit der Verwendung des Anschlussgehäuses als Zugangspunkt prinzipiell dieselben Vorteile ergeben wie nachfolgend für ein Neubaugebiet mit mehreren Wohngebäuden geschildert.

Werden in einem Neubaugebiet mehrere Wohngebäude erstellt, so werden diese zur Einrichtung einer Datenanbindung typischerweise an einem gemeinsamen Knotenpunkt zusammengefasst, z. B. einem Verteilerkasten (Spleißkasten) oder einer Spleißmuffe. Dies erfolgt nach dem Stand der Technik derart, dass zwischen dem Knotenpunkt und dem jeweiligen Wohngebäude ein jeweiliges Leerrohr im Boden verlegt wird, durch welches dann später das Datenkabel mit Druckluft eingeblasen werden kann (vom Knotenpunkt aus bis in das jeweilige Wohngebäude). Dazu muss am Knotenpunkt ein Techniker Spezialwerkzeug vorhalten (die Einblasvorrichtung) und muss ein anderer Techniker im jeweiligen Wohngebäude das Datenkabel "entgegennehmen" und ebenfalls Spezialwerkzeug vorhalten, nämlich ein Spleißgerät zum Anspleißen eines Steckers bzw. Steckerteils.

Die Erfinder haben festgestellt, dass selbst in einem Neubaugebiet, wo der Baubeginn oftmals zusammenfällt, der Baufortschritt auf den einzelnen Grundstücken divergieren kann. So befinden sich einige Wohngebäude dann bspw. noch im Rohbaustadium, während andere schon bezogen werden und dementsprechend die Datenanbindung erstellt werden muss. Im Ergebnis müssen die erwähnten Techniker mit ihrem Spezialwerkzeug wiederholt anrücken, was einen erheblichen Aufwand bedeuten kann. Im Vergleich dazu wird mit dem Anschlussgehäuse gemäß dem vorliegenden Gegenstand für die einzelnen Gebäude jeweils ein Zugangspunkt geschaffen, bspw. an der Grundstücksgrenze des jeweiligen Wohngebäudes (auf der Straße oder auch auf dem Grundstück selbst). Von dem Knotenpunkt aus können die einzelnen Anschlussgehäuse dann in einem Arbeitsdurchgang angebunden werden, lässt sich also bspw. nacheinander in die einzelnen Anschlussgehäuse jeweils ein Datenkabel einblasen und dann dort mit einem Stecker bzw. Steckerteil ausstatten. Das Spezialwerkzeug (Einblasvorrichtung/Spleißgerät) und die Techniker müssen für einen im Vergleich kürzeren Zeitraum vorgehalten werden, und die eigentliche Anbindung des Gebäudes kann dann gemäß dem vorliegenden Gegenstand mit dem vorkonfektionierten Datenkabel erfolgen.

Wie nachstehend im Einzelnen dargelegt, kann es sich bei der Montagehilfseinrichtung bspw. um ein Fitting oder eine Gebäudeeinführung handeln. Ganz allgemein kann es für die Anbindung bzw. Befestigung an der jeweiligen Wand von Vorteil sein, wenn die Montagehilfseinrichtung das Datenkabel bzw. ein das Datenkabel umhüllendes Leerrohr (siehe unten) möglichst eng umfasst. Ein von der Montagehilfseinrichtung gebildeter Führungskanal, den das Datenkabel bzw. Leerrohr durchsetzt, hat bevorzugt einen Innendurchmesser, der kleiner als ein Außendurchmesser des Steckerteils ist. Es wird also bspw. bei der werksseitigen Vorkonfektionierung zunächst die Montagehilfseinrichtung auf dem Datenkabel bzw. Leerrohr platziert und anschließend das Steckerteil angesetzt, insbesondere angespleißt.

Egal ob Innenraum des Anschlussgehäuses oder Gebäudes, wird das Ende des Datenkabels mit dem Steckerteil bevorzugt von außen in den entsprechenden Innenraum hineinverlegt, nämlich durch ein Loch in der entsprechenden Wand ("außen" meint insofern bodenseitig). Bevorzugt wird auch die Montagehilfseinrichtung von außen an die entsprechende Wand angesetzt, vorzugsweise in das Loch in der Wand eingesetzt. Nach der Befestigung der Montagehilfseinrichtung an der Wand kann das Datenkabel bzw. Leerrohr in der Montagehilfseinrichtung noch in Längsrichtung versetzbar sein, bevorzugt ist es aber jedenfalls in einem fertig montierten Zustand in seiner Längsposition festgelegt (z. B. durch ein gesondertes Dichtelement oder einen Arretierungsring).

Ein "Steckerteil" ist im Rahmen der vorliegenden Offenbarung bevorzugt ein Steckverbinder, insbesondere ein LWL-Steckverbinder im Falle des bevorzugten Glasfaserkabels. Das Steckerteil, mit dem das Datenkabel ausgestattet ist, kann bspw. über eine Klebe- und Poliertechnik, eine Crimp- und Poliertechnik oder einen mechanischen Spleiß bzw. direkten Spleiß mit dem Datenkabel verbunden sein (dies kann Gegenstand des "Ausgestattetseins" sein). Der Steckerverbinder kann bzw. wird dann mit einem weiteren Steckverbinder zusammengesteckt, bspw. einem Steckverbinder eines Knotenpunkt-Datenkabels (Anschlussgehäuse) oder einem Steckverbinder der Gebäudeverkabelung (Gebäude). Mit den zusammengesteckten Steckverbindern wird eine funktionale, also zur Datenübertragung geeignete Verbindung hergestellt.

Bei dem Steckverbinder eines Glasfaserkabels kann es sich bspw. um einen FC-, ST-, FDDI-, LC- oder SC-Steckverbinder handeln, insbesondere auch SC-Duplex. Im Allgemeinen kann das Steckteil, mit dem das Datenkabel ausgestattet ist, auch eine Vorstufe des Steckverbinders sein, also bspw. ein an das Datenkabel angespleißtes Teil des Steckverbinders, das mit einem anderen Teil zusammengesetzt den Steckverbinder ergibt. Bevorzugt handelt es sich dabei jedoch um den fertigen Steckverbinder selbst, der ohne weitere Modifikation direkt mit dem anderen Steckverbinder zusammengesetzt werden kann.

Das Datenkabel kann bspw. einen Kabelmantel aufweisen, in dem der eigentliche Kabelkern verläuft, bei dem bevorzugten Glasfaserkabel also eine Glasfaser. In dem Kabelmantel können auch mehrere Glasfasern zusammengefasst sein, also mindestens 2 oder 4 und (davon unabhängig) bspw. nicht mehr als 48, 36, 24, 12, 8 bzw. 6 Glasfasern. Zusätzlich zu der bzw. den Glasfasern kann in dem Kabelmantel auch eine Verstärkungsfaser verlaufen.

Gemäß einer bevorzugten Ausführungsform ist das vorkonfektionierte Datenkabel in einem Leerrohr angeordnet, und zwar bereits bevor das zumindest eine mit dem Steckerteil ausgestattete Ende in dem entsprechenden Innenraum angeordnet und/oder die Montagehilfseinrichtung an der diesen Innenraum begrenzenden Wand befestigt wird. Das Datenkabel kann in dem Leerrohr etwas Spiel haben, es kann also bspw. der Innendurchmesser des Leerrohres mindestens das 1,1-, 1,2-bzw. 1,3-Fache des Außendurchmessers des Datenkabels ausmachen, mit möglichen Obergrenzen bei z. B. höchstens dem 30-, 20- bzw. 10-Fachen. Das Leerrohr kann bevorzugt aus einem Kunststoffmaterial vorgesehen sein.

Das Leerrohr kann bspw. einen Außendurchmesser von höchstens 30 mm, 25 mm, 20 mm, 15 mm bzw. 12 mm haben, mit möglichen (davon unabhängigen) Untergrenzen bei z. B. mindestens 6 mm, 7 mm, 8 mm, 9 mm bzw. 10 mm. Der Innendurchmesser kann bspw. mindestens 3 mm, 4 mm, 5 mm bzw. 6 mm ausmachen, mit möglichen (davon unabhängigen) Obergrenzen bei z. B. höchstens 25 mm, 20 mm, 15 mm, 12 mm, 10 mm bzw. 8 mm. Im Falle eines Leerrohres mit gewellter Oberfläche (siehe unten) wird bei den Durchmesserbetrachtungen ein entlang des Rohres gebildeter Mittelwert zugrunde gelegt.

Das Vorsehen eines Leerrohres, in dem dann das z. B. ohnehin durch einen Kabelmantel geschützte Datenkabel angeordnet ist, mag zwar zunächst aufgrund des Zusatzaufwands nachteilig erscheinen (das Datenkabel wird nicht eingeblasen, insofern ist im Prinzip kein Leerrohr erforderlich). Es kann sich jedoch vorteilhaft eine Revisionsmöglichkeit ergeben, wenn bspw. nach der Verlegung und anschließenden Wiederherstellung des Bodenaufbaus festgestellt wird, dass das Datenkabel beschädigt wurde. Mit dem Leerrohr besteht dann zwischen dem Anschlussgehäuse (Zugangspunkt) und dem Gebäude zumindest ein Kanal, was die Verlegung eines neuen Datenkabels vereinfachen kann. Es kann also bspw. das beschädigte Datenkabel herausgezogen und anschließend ein neues Datenkabel hindurchgefädelt werden; das beschädigte Datenkabel kann aber bspw. auch als Durchzughilfe genutzt werden, also mechanisch mit dem neuen Datenkabel verbunden und anschließend aus dem Kanal herausgezogen werden. Mit dem Leerrohr ist eine solche Revision möglich, ohne dass nochmals aufgegraben werden muss.

Das Leerrohr kann bevorzugt eine gewellte Außenwandfläche haben, die in einem Axialschnitt betrachtet (Schnittebene beinhaltet Leerrohrachse) mit Erhebungen und Vertiefungen verläuft, also wellenförmig. Bevorzugt ist die Innenwandfläche komplementär zur Außenwandfläche gewellt. Das gewellte Leerrohr kann einerseits das Datenkabel hinreichend schützen, andererseits kann es vergleichsweise flexibel sein und damit gut in Schleifenform abgelegt werden, bspw. vor einer Endmontage oder im Falle einer Überlänge. Das gewellte Leerrohr kann bspw. als Wellrohr realisiert sein, bei dem jeweils in sich geschlossene Erhebungen und Vertiefungen axial aufeinander folgen; alternativ können die Erhebungen und Vertiefungen aber bspw. auch spiralförmig umlaufen.

Unabhängig von der gewellten Wandfläche, optional aber auch in Kombination damit, kann das Leerrohr auch insgesamt eine Spiralform haben (also spiralförmig um eine außerhalb des Rohres liegende Achse umlaufen). Aus der Spiralform, die dem Spiralrohr bspw. mit einer Wärmebehandlung vorgegeben sein kann, kann das Spiralrohr ausgezogen werden, und es nimmt diese Spiralform dann wieder selbsttätig ein (ohne äußere Krafteinwirkung). Es ergeben sich wiederum Vorteile beim (temporären) Ablegen in Schleifenform.

Bei dem mit dem Leerrohr vorkonfektionierten Datenkabel sitzt die Montagehilfseinrichtung bevorzugt auf dem Leerrohr. Das Leerrohr kann in die Montagehilfseinrichtung ein- oder hindurchgeschoben sein. Bevorzugt werden bzw. sind die Montagehilfseinrichtung und das Leerrohr dann jedenfalls nach der Befestigung an der Wand in ihrer axialen Relativposition festgelegt. Die Vorkonfektionierung des Datenkabels mit dem Leerrohr kann aber auch unabhängig von der Montagehilfseinrichtung von Interesse und soll entsprechend Offenbarungsgegenstand sein. Offenbart sein soll also auch, dass ein vorkonfektioniertes Datenkabel in einem Leerrohr angeordnet ist und zumindest ein Ende des Datenkabels mit einem Steckerteil ausgestattet ist, wobei das Datenkabel in diesem vorkonfektionierten Zustand (angeordnet im Leerrohr / ausgestattet mit Steckerteil) an das Anschlussgehäuse und/oder das Gebäude angebunden wird, das mit dem Steckerteil ausgestattete Ende also durch ein Loch in der entsprechenden Wand in den entsprechenden Innenraum eingebracht wird.

Gemäß einer bevorzugten Ausführungsform wird das vorkonfektionierte Datenkabel zwischen dem Anschlussgehäuse und dem Gebäude im Boden verlegt, wird es dann also bei der Herstellung des Bodenaufbaus mit Bodenmaterial bedeckt (z. B. Schotter/Kies bzw. Erdreich). Es kann bspw. in einer Tiefe von mindestens 20 cm bzw. 30 cm im Boden verlaufen, mit möglichen Obergrenzen bei z. B. höchstens 1,5 m bzw. 1 m.

Bevorzugt ist das Loch in der Gebäudewand und/oder Anschlussgehäusewand, durch welches das Datenkabel in den Innenraum hineinverlegt wird, im Boden angeordnet, also auf einer Tiefe unterhalb der Oberkante des Bodenaufbaus. Besonders bevorzugt erstreckt sich also das Datenkabel zwischen Anschlussgehäuse und Gebäude im Boden und liegen auch die Eintrittsstellen ins Gebäude sowie ins Anschlussgehäuse im Boden (unterhalb der Oberkante des Bodenaufbaus). Im Allgemeinen kann die Eintrittsstelle ins Gebäude aber bspw. auch oberirdisch liegen, kann sich also das Datenkabel z. B. im Erdreich bis zum Gebäude hin erstrecken und dann dort entlang der Wand nach oben verlaufen und bspw. im Erdgeschoss eintreten. Prinzipiell muss sich das Datenkabel auch gar nicht im Boden erstrecken, bspw. wenn das Anschlussgehäuse direkt an das Gebäude grenzend platziert ist, etwa bei einer Erschließung im Bestand.

Generell können sich mit dem vorliegenden Gegenstand auch bei einer Erschließung im Bestand Vorteile ergeben. Hier kann das Anschlussgehäuse, also der damit geschaffene Zugangspunkt, nämlich auch einer optionalen Vorverlegung bzw. Voranbindung dienen, wenn sich bspw. beim Glasfaserausbau nur ein Teil der Haushalte für den Glasfaseranschluss entscheidet. Bei den anderen Haushalten kann in diesem Zuge, da ohnehin die Straße aufgegraben wird, dann jeweils ein Anschlussgehäuse platziert werden (bspw. auf der Straße bzw. dem Gehweg, an der Grundstücksgrenze, oder auch auf dem Grundstück). Entschließt sich der entsprechende Haushalt dann später doch für eine Nachbelegung, muss jedenfalls nicht mehr die Straße aufgegraben werden. Das Anschlussgehäuse ist zumindest über ein Leerrohr an den Knotenpunkt angebunden, optional kann im Zuge der Vorverlegung auch bereits ein Datenkabel bis in das Anschlussgehäuse hineinverlegt worden sein. Die Anbindung zwischen Anschlussgehäuse und Gebäude erfolgt dann jedenfalls wiederum über ein vorkonfektioniertes Datenkabel gemäß der vorliegenden Offenbarung.

Bevorzugt ist das Anschlussgehäuse in einem gewissen Abstand zum Gebäude angeordnet, bspw. von mindestens 1 m oder 2 m, wobei mögliche Obergrenzen z. B. bei höchstens 30 m, 20 m, 15 m bzw. 10 m liegen können. Das vorkonfektionierte Datenkabel wird in bevorzugter Ausgestaltung mit Überlänge vorgesehen, seine Länge ist also größer als der tatsächliche Abstand zwischen Anschlussgehäuse und Gebäude. Im Allgemeinen kann eine Überlänge, wenn die Montagehilfseinrichtung auf dem Datenkabel bzw. Leerrohr noch versetzbar ist, auch in den jeweiligen Innenraum hineinverlegt werden. In bevorzugter Ausgestaltung wird eine Überlänge jedoch schleifenförmig im Boden abgelegt, wird also ein für die Verbindung zwischen Anschlussgehäuse und Gebäude längenmäßig nicht benötigter Abschnitt des Datenkabels bzw. Leerrohrs schleifenförmig im Boden platziert.

Der Abschnitt kann in Form einer oder mehrerer, vorzugsweise mehrerer aufeinandergelegter Schleifen abgelegt und bei der Herstellung des Bodenaufbaus mit Bodenmaterial bedeckt werden. Je nach Krümmungsradius kann ein entsprechender Graben zwischen Anschlussgehäuse und Gebäude dann in einem Abschnitt, vorzugsweise am Gebäude, etwas weiter sein. Unabhängig von diesen Details kann das Unterbringen der Überlänge im Boden z. B. hinsichtlich der optischen Erscheinung im Innenraum des Gebäudes von Vorteil sein. Zudem kann so bspw. auch das bei der Herstellung des Bodenaufbaus ohnehin benötigte Bodenmaterial selbst die Schleifenform halten, ist also anders als bei z. B. eine Positionierung im Gebäude keine aufwändige Haltevorrichtung notwendig.

Gemäß einer bevorzugten Ausführungsform wird im Zuge einer Vormontage ein erstes Ende des Datenkabels an das Anschlussgehäuse angebunden und wird das entgegengesetzte zweite Ende erst im Zuge einer Endmontage an das Gebäude angebunden. Zwischen Vor- und Endmontage kann bspw. mindestens ein Tag liegen, aber auch ein größerer Zeitraum (von z. B. mindestens einer Woche). Technisch bedingte Obergrenzen gibt es im Prinzip nicht, in der Regel werden aber nicht mehr als 12 oder 8 Monate zwischen Vor- und Endmontage liegen. Im Allgemeinen kann das im Zuge der Vormontage im Innenraum des Anschlussgehäuses platzierte Ende des Datenkabels auch ohne Steckerteil vorgesehen sein und mithilfe eines Spleißgeräts mit dem vom Knotenpunkt kommenden Datenkabel verbunden werden. Bei einer vorstehend geschilderten Neubau-Erschließung kann also bspw. das Knotenpunkt-Datenkabel eingeblasen werden, etwa vom Knotenpunkt her, und kann am Anschlussgehäuse eine Spleißverbindung zwischen diesem und dem vorkonfektionierten Datenkabel hergestellt werden. Bevorzugt ist jedoch das erste Ende des vorkonfektionierten Datenkabels mit einem Steckerteil ausgestattet, und zwar bereits bevor das vorkonfektionierte Datenkabel an das Anschlussgehäuse angeschlossen bzw. angebunden wird. An das eingeblasene Knotenpunkt-Datenkabel wird dann ein Stecker angesetzt, bspw. angespleißt, der mit dem Steckerteil bzw. Stecker des vorkonfektionierten Datenkabels zusammengesteckt wird.

In bevorzugter Ausgestaltung ist, wenn das vorkonfektionierte Datenkabel an das Anschlussgehäuse angebunden wird, jedenfalls das zweite Ende mit einem Steckerteil vorkonfektioniert, der dann später im Zuge der Endmontage durch das Loch in der Wand des Gebäudes in dessen Innenraum hineinverlegt wird. Besonders bevorzugt sind bereits vor der Vormontage das erste und das zweite Ende des vorkonfektionierten Datenkabels jeweils mit einem Steckerteil ausgestattet. Aber auch unabhängig davon wird das erste Ende des vorkonfektionierten Datenkabels bereits im Zuge der Vormontage durch ein Loch in der Wand des Anschlussgehäuses in dessen Innenraum eingebracht (unterhalb der Oberkante des fertigen Bodenaufbaus) und besteht diese Anbindung dann auch noch nach der Endmontage.

Gemäß einer bevorzugten Ausführungsform wird ein Abschnitt des vorkonfektionierten Datenkabels, der im Zuge der Endmontage zu dem Gebäude verlegt wird, zwischen Vor- und Endmontage oberhalb des Anschlussgehäuses aufbewahrt. Das vorkonfektionierte Datenkabel erstreckt sich also unterhalb der Oberkante des Bodenaufbaus zu seinem ersten Ende hin ins Anschlussgehäuse hinein, und das entgegengesetzte zweite Ende wird zeitweilig oberhalb des Anschlussgehäuses aufbewahrt (das vorkonfektionierte Datenkabel erstreckt sich außen am Anschlussgehäuse nach oben).

Bevorzugt ist bzw. wird oberhalb des Anschlussgehäuses ein Hohlkörper angeordnet, in dessen Hohlkörperinnenraum das vorkonfektionierte Datenkabel abgelegt wird. Der Hohlkörperinnenraum ist oberhalb des Innenraums des Anschlussgehäuses angeordnet, also oberhalb der Oberkante des Bodenaufbaus. Das dort verwahrte vorkonfektionierte Anschlusskabel ist für die Endmontage gut zugänglich. Der Hohlkörper wird bzw. ist bevorzugt an dem Anschlussgehäuse befestigt, bevorzugt an einer oberseitigen Flanschplatte des Anschlussgehäuses (die im Wesentlichen bündig mit einer Oberkante des Bodenaufbaus liegt). Der Hohlkörper kann mit dem Anschlussgehäuse verschraubt und/oder verrastet werden, er kann bspw. die erwähnte Flanschplatte vertikal formschlüssig umgreifen.

Generell kann der Innenraum des Anschlussgehäuses bspw. ein Volumen von mindestens 20 I, 30 I, 40 I bzw. 50 I haben, mit möglichen (davon unabhängigen) Obergrenzen bei bspw. höchstens 100 I, 90 I, 80 I, 70 I bzw. 60 I. Der in bevorzugter Ausgestaltung aufgesetzte Hohlkörper kann bspw. ein Innenvolumen von mindestens 2 I, 4 I bzw. 6 I haben, mit möglichen (davon unabhängigen) Obergrenzen bei z. B. höchstens 60 I, 50 I, 40 I bzw. 30 I.

Generell ist bzw. wird die Öffnung des Anschlussgehäuses, über welche deren Innenraum von oben zugänglich ist, bevorzugt mit einem Deckel verschlossen. Wird bspw. das Knotenpunkt-Datenkabel zwischen Knotenpunkt und Anschlussgehäuse verlegt, kann dieser Deckel für die Kabelarbeiten abgenommen werden. Dann kann das Knotenpunkt-Datenkabel zwischen Knotenpunkt und Anschlussgehäuse verlegt, und es kann an dem anschlussgehäuseseitigen Ende ein Steckerteil angespleißt werden. Dieser kann anschließend mit dem mit einem Stecker bzw. Steckerteil ausgestatteten ersten Ende des vorkonfektionierten Datenkabels zusammengesteckt werden.

Bei der Vormontage des vorkonfektionierten Datenkabels kann das Knotenpunkt-Datenkabel bereits ins Anschlussgehäuse verlegt und mit einem Stecker versehen worden sein, dies kann aber auch erst danach erfolgen, also zwischen Vor- und Endmontage oder auch nach der Endmontage des vorkonfektionierten Datenkabels. Unabhängig von der Abfolge im Einzelnen kann die Aufbewahrung im Hohlkörper oberhalb des Anschlussgehäuses eine gewisse "Gewerketrennung" schaffen, insbesondere in Kombination mit dem Deckel. Für die Endmontage ist nicht mehr zwingend ein Zugang in den Innenraum des Anschlussgehäuses erforderlich, was Zuständigkeiten klarstellen und etwaige Montagefehler eingrenzen helfen kann. Es können bspw. sämtliche Spleiß- und/oder Steckverbindungen im Anschlussgehäuse jenen Technikern vorbehalten bleiben, die das Anschlussgehäuse mit dem Knotenpunkt verbinden. Die Variante "temporäre Aufbewahrung im Hohlkörper oberhalb des Anschlussgehäuses" wird auch unabhängig von der Vorkonfektionierung des Datenkabels mit einer Montagehilfseinrichtung als Erfindung gesehen und soll entsprechend offenbart sein, also bspw. auch für ein nur mit Leerrohr und Stecker vorkonfektioniertes Datenkabel.

Gemäß einer bevorzugten Ausführungsform wird auf dem Anschlussgehäuse, also oberhalb einer Oberkante des Bodenaufbaus, ein Verkehrsleitkegel angeordnet. Dieser kann bspw. eine Signalfarbgebung haben, also z. B. gelb oder orange sein. Er kann auch in besonderer Weise Licht reflektierend gestaltet sein, z. B. mit aufgebrachten, insbesondere aufgeklebten Reflexionsflächen bzw. -streifen. Der Leitkegel, der bevorzugt an dem Anschlussgehäuse befestigt wird, etwa verschraubt und/oder verrastet, kann bspw. in einem Neubaugebiet eine Warn- bzw. Hinweisfunktion haben, z. B. den Führern von Baufahrzeugen anzeigen, dass an der entsprechenden Stelle im Boden ein Anschlussgehäuse platziert ist. Der Leitkegel verbleibt dann bevorzugt nicht dauerhaft auf dem Anschlussgehäuse, er kann bspw. nach der Herstellung des Boden- bzw. Straßenaufbaus abgenommen werden. Ein solches, jedenfalls temporäres Ausstatten eines Anschlussgehäuses mit einem Leitkegel wird auch unabhängig von den Merkmalen des Hauptanspruchs als Erfindung gesehen und soll entsprechend offenbart sein, also auch unabhängig von der Verbindung zwischen Anschlussgehäuse und Gebäude mittels eines vorkonfektionierten Datenkabels.

In bevorzugter Ausgestaltung dient der vorstehend genannte Hohlkörper zugleich als Leitkegel, bildet also in anderen Worten der Leitkegel einen Hohlraum oberhalb des Anschlussgehäuses, in dem das vorkonfektionierte Datenkabel abgelegt bzw. bereitgehalten wird.

Wie bereits erwähnt, handelt es sich bei der Datennutzer- oder Datenverteilerstelle bevorzugt um ein Gebäude. Auch im Falle einer Datenverteilerstelle kann ein Gebäude vorgesehen sein, bspw. als Technikgebäude einer Funkstation. Bevorzugt ist jedoch ein Datennutzerstelle und insbesondere ein Wohn- und/oder Bürogebäude vorgesehen. Die Wand, durch welche das vorkonfektionierte Datenkabel verlegt wird, ist jedenfalls eine Gebäudewand, bevorzugt eine Gebäudeaußenwand. Gebäudeaußenseitig erstreckt sich das vorkonfektionierte Datenkabel bevorzugt im Boden, es kann gebäudeinnenseitig in einem Kellerraum oder auch oberirdisch austreten. Letzteres kann bspw. mit einer sich gewinkelt zur horizontalen Richtung, also schräg nach oben erstreckenden Durchgangsöffnung in der Gebäudewand erreicht werden. Generell wird die Durchgangsöffnung bevorzugt als Bohrung in die Wand eingebracht, bevorzugt im Zuge der Endmontage.

Das mit dem Steckerteil ausgestattete Ende des vorkonfektionierten Datenkabels wird samt Steckerteil von der Gebäudeaußenseite durch die Durchgangsöffnung in den Gebäudeinnenraum geschoben. Wie oben dargelegt, wird das Datenkabel dann in bevorzugter Ausgestaltung mit einer Montagehilfseinrichtung, die ebenfalls Gegenstand der Vorkonfektionierung ist, an der Gebäudewand befestigt. Die Montagehilfseinrichtung kann bspw. einen Flansch aufweisen, der sich an die Außenseitenfläche der Gebäudewand anlegt. Ein solcher Flansch kann bevorzugt gegen die Außenseitenfläche gedichtet sein, z. B. mit einem Butyldichtband.

Gemäß einer bevorzugten Ausführungsform wird die Montagehilfseinrichtung an der Gebäudewand befestigt, indem zumindest ein Abschnitt der Montagehilfseinrichtung in die Durchgangsöffnung eingeschoben und mit einem Verfüllmaterial festgelegt wird. Die als Gebäudeeinführung vorgesehene Montagehilfseinrichtung wird bevorzugt von der Gebäudeaußenseite her eingeschoben, besonders bevorzugt kann hierbei einen Flansch (siehe oben) der Montagehilfseinrichtung einen Anschlag bilden. Der in die Durchgangsöffnung eingeschobene Abschnitt der Montagehilfseinrichtung kann als Hülse ausgebildet sein, das Datenkabel bzw. Leerrohr also über einen Abschnitt hinweg umlaufend einfassen.

Das Vergussmaterial wird bevorzugt über einen Injektionsschlauch zugeführt, besonders bevorzugt in den Ringraum zwischen Hülse und Laibung der Durchgangsöffnung (alternativ oder zusätzlich könnte es auch in den Ringraum zwischen Datenkabel/Leerrohr und Hülse eingebracht werden und durch Öffnungen in der Hülse austreten). Unabhängig von der Art der Zufuhr im Einzelnen legt sich das Vergussmaterial dann bspw. an die Laibung der Durchgangsöffnung an und hält es die Montagehilfseinrichtung in Position. Das Vergussmaterial ist bevorzugt ein Expansionsmaterial, es vergrößert also vor bzw. bei dem Aushärten sein Volumen. Es kann bspw. ein Schaummaterial vorgesehen werden, etwa auf Polyurethan-Basis.

Wie erwähnt, weist die an der Gebäudewand installierte Montagehilfseinrichtung bevorzugt einen Hülsabschnitt und einen Flansch auf, wobei im montierten Zustand der Hülsabschnitt in der Durchgangsöffnung sitzt und der Flansch an der Außenseitenfläche anliegt. Besonders bevorzugt können der Flansch und der Hülsabschnitt zueinander verkippbar sein, sodass der Flansch auch bei einer schrägen Durchgangsöffnung flächig anliegen kann. Die Relativverkippbarkeit kann bspw. über ein Knie- oder vorzugsweise Kugelgelenk realisiert sein.

Gemäß einer bevorzugten Ausführungsform ist die Montagehilfseinrichtung, mit welcher das vorkonfektionierte Datenkabel an dem Anschlussgehäuse montiert wird, ein Fitting. Das an dem Anschlussgehäuse montierte Fitting sitzt dann bevorzugt in einem Loch in der Wand des Anschlussgehäuses (es bildet also den Übergang zwischen Außenseite des Anschlussgehäuses und Innenraum). Im Allgemeinen kann das Fitting bspw. auch über eine Schraubverbindung an dem Anschlussgehäuse befestigt werden, etwa mit einem Außengewinde vorgesehen sein oder mit einer Überwurfmutter befestigt werden. Bevorzugt ist jedoch eine Rastverbindung, was die Montage vereinfachen und z. B. in Anbetracht des Zeitdrucks der Erdarbeiten von Vorteil sein kann.

Im Allgemeinen kann auch das Fitting selbst an bzw. in der Wand des Anschlussgehäuses verrasten, bevorzugt erfolgt die Montage über einen Adapter. In diesem ist das Fitting angeordnet, Adapter und Fitting werden bzw. sind gemeinsam in das Loch eingeschoben. Der in dem Loch angeordnete Adapter umschließt das Fitting und hält es auszugsicher, je nach Ausgestaltung ist auch eine Verdrehsicherung möglich (wenn das Fitting eine nicht kreisförmige Außenkontur hat, die zu einer Innenkontur des Adapters komplementär ist).

Bevorzugt ist eine Kombination des Fittings mit dem Leerrohr, in dem als Teil der Vorkonfektionierung das Datenkabel angeordnet ist. Bevorzugt ist dabei ein Ende des Leerrohrs in das Fitting eingeschoben und darin angeordnet (nicht hindurchgeschoben). Das Leerrohr kann in dem Fitting bspw. mit einer Überwurfmutter arretiert sein, die auf- bzw. festgeschraubt wird (Schraubfitting). Bevorzugt weist das Fitting einen Arretierungsring mit Sperrzähnen auf, die sich an dem Leerrohr verkrallen und eine Auszugsicherung schaffen; bevorzugt kann zusätzlich ein Löseelement vorgesehen sein, bspw. eine Hülse, die sich einschieben lässt und die Sperrzähne aus der Verkrallung hebt. Besonders bevorzugt ist dann gar kein zusätzliches Verschrauben notwendig (Steckfitting). Generell kann ein "Fitting" also eine Anschlussstelle sein, an welcher das angesetzte Leerrohr auszugsicher gehalten ist (die zum Ausziehen notwendige Kraft kann bspw. mindestens das 2- oder 4-Fache der zum Ansetzen notwendigen Kraft sein, mit möglichen Obergrenzen bei z. B. höchstens dem 1000-, 500-, 100- bzw. 50-Fachen).

Bei der Kombination aus Fitting und Leerrohr (das im Boden verlegt wird) kann auch der entgegengesetzten Seite des Fittings ein Leerrohrstück angesetzt sein, welches sich dann im montierten Zustand in dem Anschlussgehäuse erstreckt. Dieses Leerrohrstück ist bevorzugt ebenfalls Teil der Vorkonfektionierung, ist also bereits am Fitting montiert, wenn dieses am Anschlussgehäuse montiert wird. Es kann bevorzugt eine gewellte Oberfläche haben und/oder ein Spiralrohr sein, vgl. die vorstehenden Anmerkungen.

Gemäß einer bevorzugten Ausführungsform ist das zumindest eine mit dem Steckerteil ausgestattete Ende des vorkonfektionierten Datenkabels mit einer Schutzhülle ausgestattet. Diese schützt das Steckerteil und insbesondere auch den Übergang zum Datenkabel, kann also einem Abknicken vorbeugen. Eine solche Schutzfunktion kann speziell auch beim Einführen des Steckerteils in den entsprechenden Innenraum (von Anschlussgehäuse oder Gebäude) von Vorteil sein, weswegen die Schutzhülle bevorzugt bereits hierbei auf dem Datenkabel angeordnet ist, besonders bevorzugt ist sie Teil dessen Vorkonfektionierung. Die Schutzhülle kann in ihrer Formgebung auch so vorgesehen sein, dass sie das Ein- bzw. Hindurchführen begünstigt, also bspw. eine langgestreckte (prolate) Form haben. Speziell im Falle der Gebäudewand lässt sich das Steckerteil mit einer solchen zylindrischen bzw. ellipsoidalen Schutzhülle gut durch die Öffnung bringen, auch wenn deren Länge im Verhältnis zum Durchmesser relativ groß ist. Eine solche, als Formteil vorgesehene Schutzhülle, kann bspw. aus einem Schaumstoffmaterial hergestellt sein. Dies ist auch beim Anschlussgehäuse möglich, wenngleich die Schutzhülle dort in der Regel weniger stabil sein muss (anderes Verhältnis von Lochdurchmesser und -länge), also bspw. auch ein Beutel aus einer Kunststofffolie die Schutzhülle bilden kann.

Gemäß einer bevorzugten Ausführungsform weist das Datenkabel mindestens zwei Glasfasern auf (vergleiche auch oben). Bevorzugt sind diese an dem zumindest einem Ende jeweils mit einem Steckerteil ausgestattet, wobei diese Steckerteile besonders bevorzugt in Längsrichtung zueinander versetzt sind. Der Versatz kann bspw. mindestens 1 cm oder 2 cm ausmachen, mit möglichen Obergrenzen bei zum Beispiel höchstens 20 cm, 15 cm bzw. 10 cm. Der Versatz kann zum Beispiel dahingehend von Vorteil sein, dass die Steckerteile dann speziell beim Hindurchführen durch eine Gebäudewand in deren Durchgangsöffnung aufeinanderfolgend angeordnet sind, sich also gut durch die Öffnung bringen lassen. Ist bevorzugt eine Schutzhülle vorgesehen, kann diese der Mehrzahl Steckerteile entsprechend auch mehrere aufeinanderfolgende Aufnahmepositionen festlegen, in denen dann jeweils eine oder auch zwei der Stecker angeordnet sind. Wie erwähnt, weist das Datenkabel besonders bevorzugt sechs Glasfasern auf, wobei die an dem zumindest einen Ende vorgesehenen Steckerteile bspw. jeweils paarweise beieinander und dabei in drei Gruppen versetzt sein können.

Wie bereits erwähnt, sind in bevorzugter Ausgestaltung beide Enden des vorkonfektionierten Datenkabels jeweils im Zuge der Vorkonditionierung bereits mit einem oder mehreren Steckerteilen ausgestattet. Besonders bevorzugt ist auch jedem Ende bereits im Zuge der Vorkonfektionierung eine Montagehilfseinrichtung zugeordnet, z. B. dem anschlussgehäuseseitigen Ende das Fitting und dem gebäudeseitigen Ende die Gebäudeeinführung zur Befestigung mit Vergussmaterial.

Die Erfindung betrifft auch ein Verfahren zum Anbinden einer Datennutzer- oder Datenverteilerstelle an ein Anschlussgehäuse mittels eines vorkonfektionierten Datenkabels.

Ferner betrifft die Erfindung eine Kabelanbindungseinheit mit einer Datennutzer- oder Datenverteilerstelle, einem Anschlussgehäuse und einem vorkonfektionierten Datenkabel. Dieses ist mit einem Ende bereits an das Anschlussgehäuse oder das Gebäude angebunden, das andere Ende ist hingegen noch frei, dabei aber aufgrund der Vorkonfektionierung bereits mit einem Steckerteil ausgestattet. Eine solche Kabelanbindungseinheit kann sich insbesondere im Zuge einer vorstehend geschilderten Vormontage ergeben, generell wird auf die vorstehende Offenbarung verwiesen.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein mit einem Anschlussgehäuse, das aus einem Ober- und einem Unterteil zusammengesetzt ist, in schematischer Darstellung;
- Figur 2: verschiedene Möglichkeiten zur Positionierung von Anschlussgehäusen bei einer Erschließung von Gebäuden im Bestand;
- Figur 3: analog Figur 2 eine Möglichkeit zur Positionierung von Anschlussgehäusen im Falle eines Neubaugebiets;
- Figur 4: ein vorkonfektioniertes Datenkabel zum Anbinden eines Gebäudes in einer Situation gemäß Figur 2 oder 3 an ein Anschlussgehäuse;
- Figur 5: einen ersten Schritt der Montage des vorkonfektionierten Datenkabels an dem im Boden platzierten Anschlussgehäuse;
- Figur 6: eine Situation zwischen einer Vor- und einer Endmontage des vorkonfektionierten Datenkabels;
- Figur 7: die Endmontage des vorkonfektionierten Datenkabels am Gebäude, auf die Situation gemäß Figur 6 folgend;
- Figur 8: Details zum weiteren Anschluss des vorkonfektionierten Datenkabels.

### Bevorzugte Ausführung der Erfindung

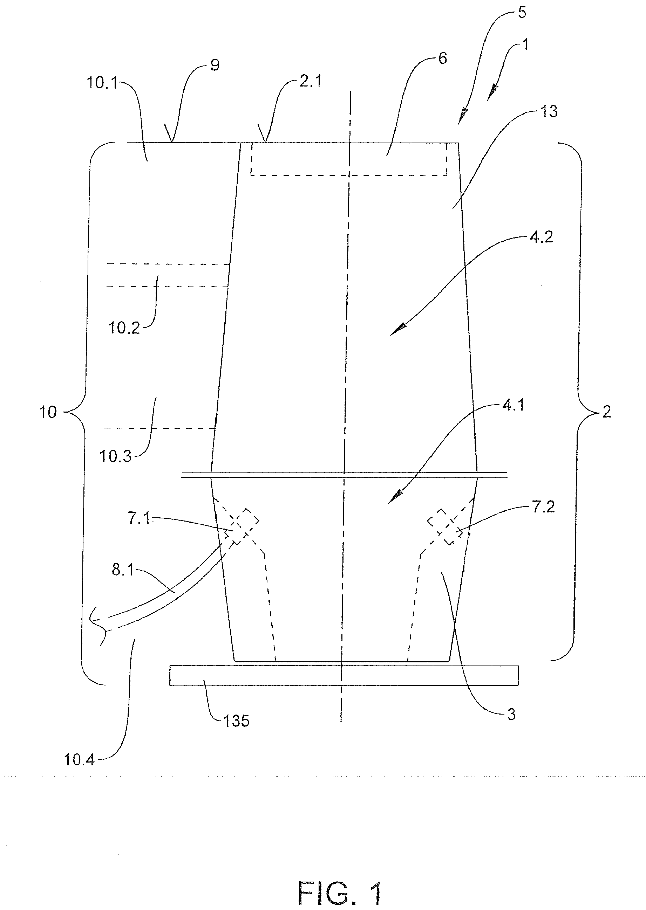

Figur 1 zeigt einen Aufbau 1 mit einem Anschlussgehäuse 2, das aus einem Unterteil 3 und einem Oberteil 13 zusammengesetzt ist. Bei dem Oberteil 13 handelt es sich um eine Straßenkappe. Das Anschlussgehäuse 2 begrenzt einen Innenraum 4, welcher sich der Gliederung in Unter- und Oberteil 3, 13 entsprechend in einen unteren Abschnitt 4.1 und einen oberen Abschnitt 4.2 gliedert. Oberseitig weist das Anschlussgehäuse 2 eine Öffnung 5 auf, über welche der Innenraum 4 zugänglich ist, und die vorliegend mit einem Deckel 6 verschlossen ist.

Das Anschlussgehäuse 2 ist mit Anschlussstellen 7.1, 7.2 ausgestattet. An die Anschlussstelle 7.1 ist ein Leerrohr 8.1 angesetzt, das sich von einem Leerrohrstrang zu dem Anschlussgehäuse 2 erstreckt. Über die Anschlussstelle 7.2 wird das Anschlussgehäuse 2 mit dem Verteiler/Nutzer, bspw. einem Gebäude verbunden.

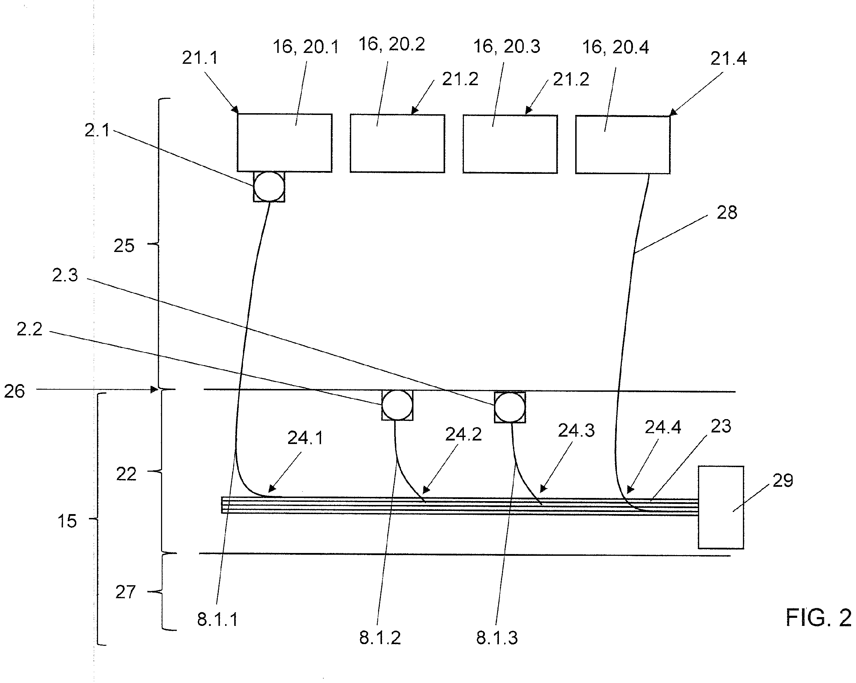

Das Anschlussgehäuse 2 wird außerhalb des Gebäudes im Boden z. B. im Schichtaufbau 10 der Straße 15 platziert (siehe auch Figur 2), sodass eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3, 10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 ein Leerrohr 28 auch direkt verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration. Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Die Verbindung zum jeweiligen Gebäude erfolgt dann mit einem vorkonfektionierten Datenkabel, siehe unten im Detail. Bei dem Gebäude 20.1 sitzt das Anschlussgehäuse 2.1 direkt an der Gebäudegrundfläche 21.1, und zwar nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2, 20.3 muss zur Erdverlegung zwar ein Stück auf dem Grundstück 25 ausgehoben werden, der Aufwand hierfür ist jedoch deutlich geringer als für das Aufgraben des Gehwegs 22.

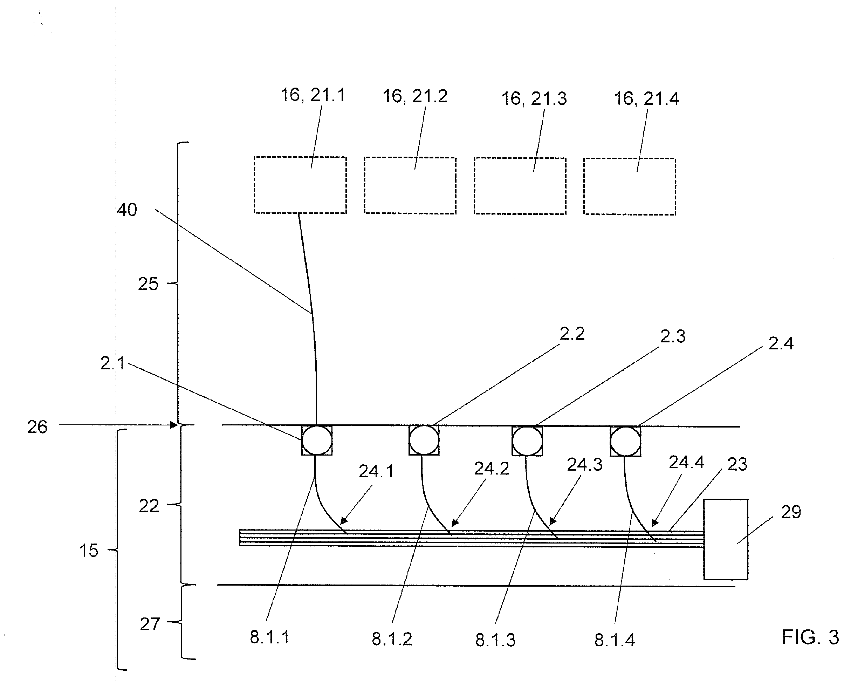

Figur 3 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Sie könnten aber auch auf den Grundstücken 25 platziert werden.

Wird dann das erste Gebäude fertiggestellt, bspw. auf der Gebäudegrundfläche 21.1, kann in das entsprechende Anschlussgehäuse 2.1 von dem Knotenpunkt 29 her ein Knotenpunkt-Datenkabel eingeblasen werden. Da hierfür Spezialwerkzeug bereitgestellt werden muss (Einblasvorrichtung und Spleißgerät), wird dann im selben Zuge auch gleich in die anderen Anschlussgehäuse 2.2-2.4 jeweils ein Knotenpunkt-Datenkabel verlegt. Die Anbindung zwischen Gebäude 20 und Anschlussgehäuse 2, vorliegend also dem Anschlussgehäuse 2.1, wird mit einem vorkonfektionierten Datenkabel 40 hergestellt. In gleicher Weise kann dann auch bei den anderen Gebäuden verfahren werden, wenn diese sukzessive fertiggestellt sind und angebunden werden können. Gleichermaßen kann mit dem nachstehend im Detail diskutierten vorkonfektionierten Datenkabel 40 auch eines der Gebäude 20.1-20.3 gemäß Figur 2 nachträglich angebunden werden, wenn später doch die Entscheidung für eine Glasfaser-Nachrüstung fällt.

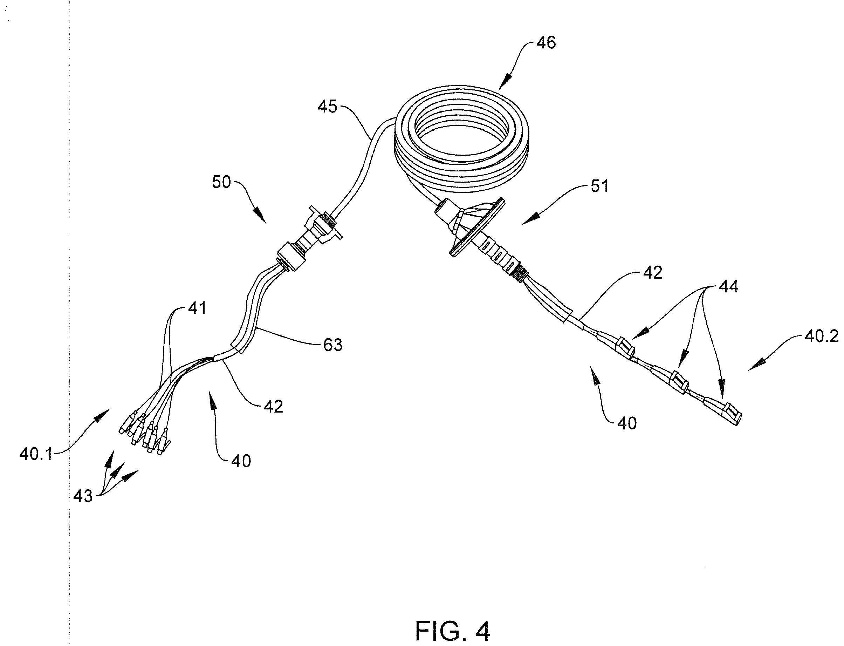

Figur 4 zeigt ein vorkonfektioniertes Datenkabel 40, mit dem eine Datennutzerstelle 16, also ein Gebäude 20 an ein jeweiliges Anschlussgehäuse 2 angebunden werden kann.

Das vorkonfektionierte Datenkabel 40 weist im vorliegenden Beispiel sechs Glasfasern 41 auf, die in einem Kabelmantel 42 geführt sind. Ein erstes Ende 40.1 des vorkonfektionierten Datenkabels 40 ist zur Montage am Anschlussgehäuse 2 vorgesehen, dass entgegengesetzte zweite Ende 40.2 zur Montage am Gebäude 20. Das vorkonfektionierte Datenkabel 40 ist an jedem Ende 40.1, 40.2 mit einem Steckerteil 43, 44 ausgestattet, konkret ist an jede Glasfaser 41 an jedem Ende 40.1, 40.2 jeweils ein Steckerteil 43, 44 angespleißt. Ferner verläuft das vorkonfektionierte Datenkabel 40 zwischen den beiden Enden 40.1, 40.2 in einem Leerrohr 45, vorliegend einem Wellrohr. Dieses bietet einerseits zusätzlich zu dem Kabelmantel 42 einen Schutz für die Glasfasern 41, andererseits lässt es sich gut in Form von Schleifen 46 ablegen.

Auf dem Datenkabel 40 ist eine Montagehilfseinrichtung 50 zur Befestigung an dem Anschlussgehäuse 2 und ferner eine weitere Montagehilfseinrichtung 51 zur Befestigung an der Wand des Gebäudes 20 angeordnet, siehe unten im Detail.

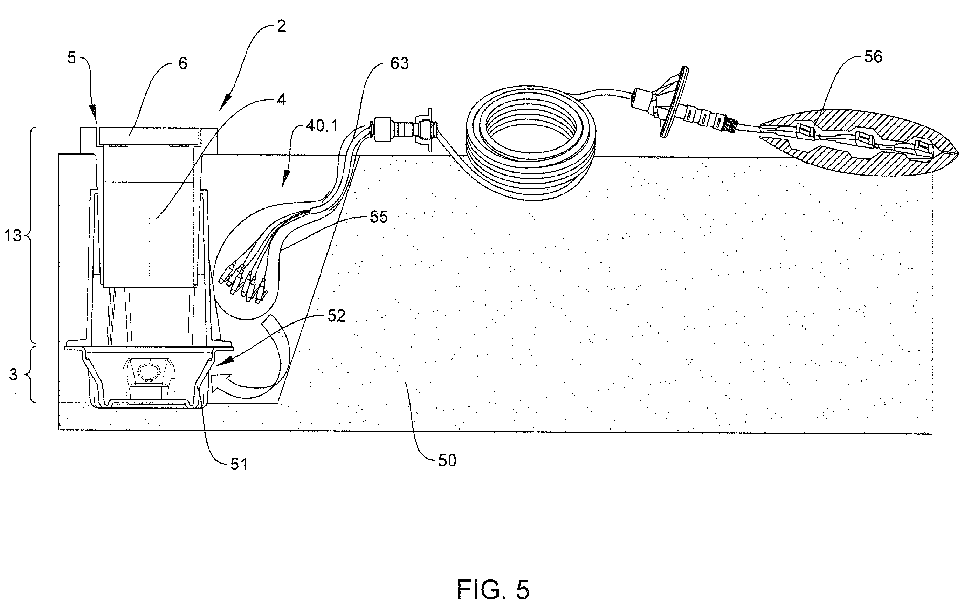

Figur 5 zeigt einen ersten Schritt der Installation des vorkonfektionierten Datenkabels 40, wobei das Anschlussgehäuse 2 bereits im Boden 50 angeordnet ist. Bei letzterem kann es sich analog Figur 1 um den Schichtaufbau 10 einer Straße handeln, bei einer Platzierung an der Grundstücksgrenze oder im Gartenbereich kann aber bspw. auch eine Mutterboden-/Humusschicht den Bodenaufbau bilden, ebenso kann das Anschlussgehäuses 2 in Schüttgut, wie z. B. Kies etc. eingebettet sein. Das Anschlussgehäuse 2 ist analog Figur 1 aus einem Unterteil 3 und einem Oberteil 13 aufgebaut, wobei das Oberteil 13 vorliegend als höhenverstellbare Straßenkappe vorgesehen ist. In einer Wand 51 des Anschlussgehäuses 2, die dessen Innenraum 4 begrenzt, ist ein Loch 52 vorgesehen, dieses bildet die Anschlussstelle 7.2.

Durch das Loch 52 wird das erste Ende 40.1 des vorkonfektionierten Datenkabels 40 in den Innenraum 4 des Anschlussgehäuses 2 eingebracht. Dabei ist das Ende 40.1 in einer Schutzhülle 55 angeordnet, die auch schon Teil der Vorkonfektionierung ist (der Übersichtlichkeit halber aber in Figur 4 nicht gezeigt ist). Auch das entgegengesetzte zweite Ende 40.2 des vorkonfektionierten Datenkabels 40 ist in einer Schutzhülle 56 angeordnet, vorliegend einem schematisch im Schnitt gezeigten Schaumstoffkörper, der eine lang gestreckte Form hat und Aufnahmen für die Steckerteile 44 bildet.

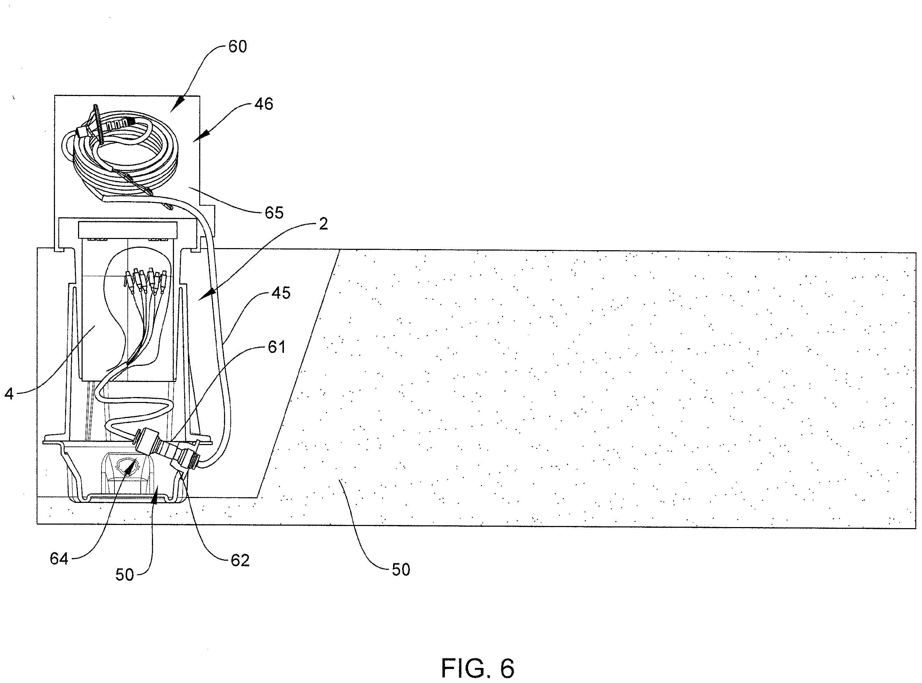

Figur 6 zeigt das Anschlussgehäuse und das vorkonfektionierte Datenkabel nach einer Vormontage, das erste Ende 40.1 ist im Innenraum 4 des Anschlussgehäuses 2 angeordnet. Ferner ist das Datenkabel 40 über die Montagehilfseinrichtung 50 an dem Anschlussgehäuse 2 befestigt. Dazu weist die Montagehilfseinrichtung 50 ein Fitting 61 auf, welches den Übergang zwischen Innenraum 4 und Außen- bzw. Bodenbereich markiert. Das Fitting 61 wird auszugssicher von einem Adapter 62 gehalten, dieser ist in dem Loch 52 in der Wand 51 verrastet. Im vorliegenden Beispiel endet das Leerrohr 45 an dem Fitting 61, zur Verlängerung im Anschlussgehäuse ist ein Leerrohrstück 63 angesetzt (in Figur 6 der Übersichtlichkeit halber nicht referenziert), vergleiche Figuren 4 und 5 zur Illustration. Mit dem Fitting 61 sind also das Leerrohr 45 und das Leerrohrstück 63 zusammengesteckt. Bevorzugt weist das Fitting 61 einen Gasstopp 64 auf, dieser ist bevorzugt schraubbar. Mit dem Gasstopp 64 lässt sich das Datenkabel 40 gegen das bodenseitige Innenvolumen des Leerrohres 45 abdichten, was bspw. etwaige Ausbreitungswege für Schleichgas blockieren kann.

Ein Abschnitt 60 des Datenkabels 40, der dann später zum Gebäude 20 hin verlegt wird, wird in Form von Schleifen 46 temporär oberhalb des Anschlussgehäuses 2 verwahrt. Soll später die Verlegung zum Gebäude 20 hin vorgenommen werden, muss am Anschlussgehäuse 2, konkret in dessen Innenraum 4 zumindest bauherrenseitig mitunter gar nicht mehr hantiert werden. Der Abschnitt 60 wird in einem auf das Anschlussgehäuse 2 aufgesetzten Hohlkörper 65 gelagert, der vorliegend eine Quaderform hat. Es sind aber insbesondere auch Zylinder- bzw. Kegelformen möglich, und der Hohlkörper 65 kann zusätzlich zu der Aufbewahrungsauch eine Signalfunktion erfüllen. Er kann speziell während der Erdbauarbeiten die Position des Anschlussgehäuses 2 markieren und damit einer Beschädigung vorbeugen. In Figur 6 ist um das Anschlussgehäuse 2 herum noch aufgegraben, dieses Loch im Boden 50 kann aber auch aufgeschüttet werden.

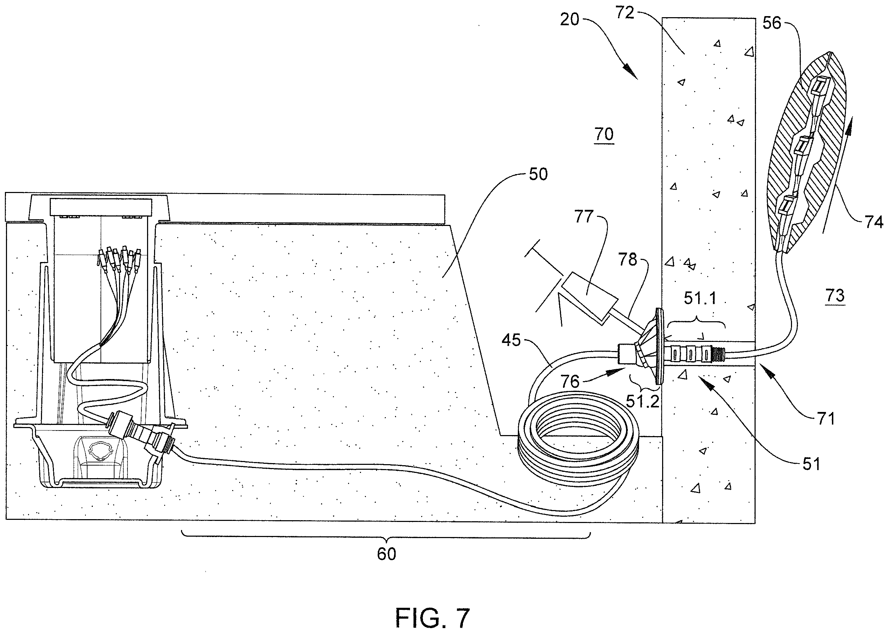

In der Situation gemäß Figur 7 wurde der Hohlkörper 65 bereits abgenommen, und wurde der Abschnitt 60 des vorkonfektionierten Datenkabels 40 im Boden 50 zum Gebäude 20 hin verlegt. Die in der Schutzhülle angeordneten Steckerteile 40 wurden von der Gebäudeaußenseite 70 her durch die Öffnung 71 in der Wand 72, nämlich der Gebäudewand, in dessen Innenraum 73 eingebracht. Die Schutzhülle 56 und die in Längsrichtung 74 versetzt angeordneten Steckerteile 44 vereinfachen dieses Durchführen (die Schutzhülle 56 ist nicht maßstäblich gezeigt).

Mit der Montagehilfseinrichtung 51, die als Gebäudeeinführung ausgebildet ist, wird das Leerrohr 45 bzw. Datenkabel 40 in der Öffnung 71 befestigt. Dazu ist ein Hülsabschnitt 51.1 der Montagehilfseinrichtung 51 in die Öffnung 71 eingeschoben, und zwar bis ein Flanschabschnitt 51.2 an der Wand 72 anliegt. Der Hüls- und der Flanschabschnitt 51.1, 51.2 sind über ein Kugelgelenk 76 verkippbar zueinander gelagert, das Loch 71 könnte sich auch schräg durch die Wand 72 erstrecken. Der Hülsabschnitt 51.1 wird in der Öffnung 71 mit einem Vergussmaterial 77 befestigt, vorliegend einem 2-Komponenten-Schaum auf Polyurethan-Basis. Das Vergussmaterial 77 wird über einen Schlauch 78 zugeführt, es füllt dann die Öffnung 71 aus und hält den Hülsabschnitt 51.1 in der Wand 72. In der Gebäudeeinführung kann das Datenkabel 40 auch gegen das Leerrohr 45 gedichtet werden, also gegen dessen bodenseitiges Innenvolumen.

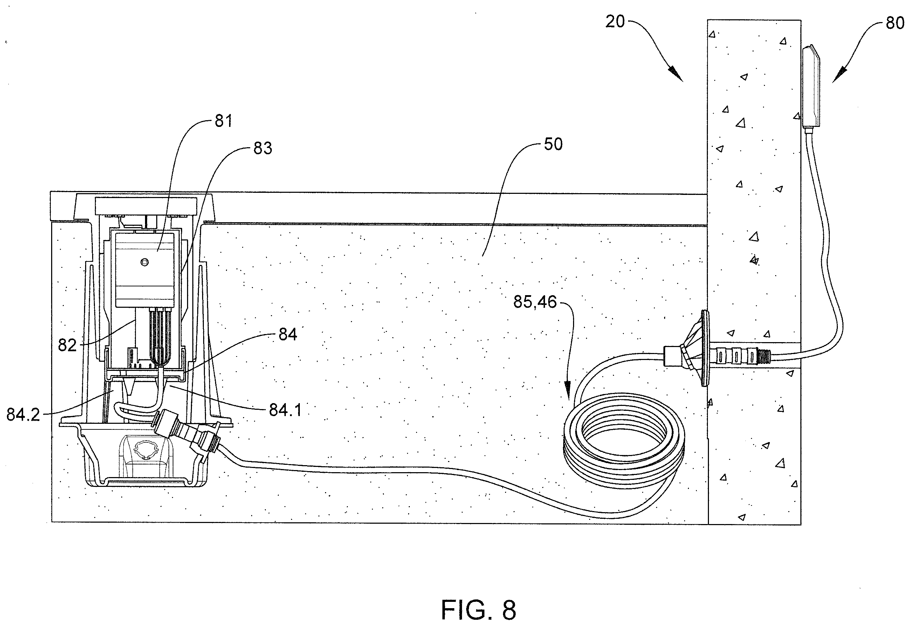

Figur 8 zeigt das vorkonfektionierte Datenkabel 40 im fertig angeschlossenen Zustand, in dem Innenraum 73 des Gebäudes 20 sind die Steckerteile 40 in einer Anschlussdose 80 angeordnet, ist also der Hausanschluss hergestellt. In dem Anschlussgehäuse 2 ist ein Steckergehäuse 81 platziert, in diesem ist das vorkonfektionierte Datenkabel 40 mit einem Knotenpunkt-Datenkabel 82 zusammengesteckt, das von dem Knotenpunkt 29 kommt, vergleiche Figuren 2 und 3. Das Steckergehäuse 81 ist in einem topfförmigen, nach unten offenen Dichtbehälter 83 angeordnet, der es gegen aufsteigendes Wasser schützt. Das offene Ende des Dichtbehälters 83 ist zusätzlich mit einem Elastomermantel 84 verschlossen, der von den Datenkabeln 40, 82 durchsetzte Dichttüllen 84.1, 84.2 bildet. Eine Überlänge 85 des Datenkabels 40 ist in Form einer Schleife 46 in dem Boden 50 abgelegt.

## Patentansprüche

1. Verwendung eines Datenkabels (40) zum Anbinden einer Datennutzer- oder Datenverteilerstelle (16) an ein Anschlussgehäuse (2),
wobei das Anschlussgehäuse (2)
- eine Wand (51) aufweist, die einen Innenraum (4) begrenzt, und
- in einen Boden (50) eingebaut ist,
und wobei die Datennutzer- oder Datenverteilerstelle (16)
- eine Wand (72) aufweist, die einen Innenraum (73) begrenzt,
und wobei das Datenkabel (40) vorkonfektioniert ist, nämlich
- an zumindest einem Ende (40.1, 40.2) mit einem Steckerteil (43, 44) ausgestattet und
- mit einer Montagehilfseinrichtung (50, 51) versehen ist,
bei welcher Verwendung das vorkonfektionierte Datenkabel (40) an das Anschlussgehäuse (2) oder die Datennutzer- oder Datenverteilerstelle (16) angebunden wird, nämlich das zumindest eine mit dem Steckerteil (43, 44) ausgestattete Ende (40.1, 40.2) des Datenkabels (40) in den entsprechenden Innenraum (4, 73) hineinverlegt wird und die Montagehilfseinrichtung (50, 51) an der diesen Innenraum (4, 73) begrenzenden Wand (51, 72) befestigt wird.

2. Verwendung nach Anspruch 1, bei welcher das vorkonfektionierte Datenkabel (40) in einem Leerrohr (45) angeordnet ist, und zwar bereits bevor das zumindest eine mit dem Steckerteil (43, 44) ausgestattete Ende (40.1, 40.2) in den entsprechenden Innenraum (4, 73) hineinverlegt und die Montagehilfseinrichtung (50, 51) an der diesen Innenraum (4, 73) begrenzenden Wand (51, 72) befestigt wird.

3. Verwendung nach Anspruch 1 oder 2, bei welcher das vorkonfektionierte Datenkabel (40) zwischen dem Anschlussgehäuse (2) und der Datennutzer- oder Datenverteilerstelle (16) in dem Boden (50) verlegt wird.

4. Verwendung nach Anspruch 3, wobei eine Überlänge (85) des vorkonfektionierten Datenkabels (40), die bei der Verlegung des Datenkabels (40) zwischen dem Anschlussgehäuse (2) und der Datennutzer- oder Datenverteilerstelle (16) resultiert, in Form einer Schleife (46) in dem Boden (50) verlegt wird.

5. Verwendung nach einem der vorstehenden Ansprüche, bei welcher
- ein erstes Ende (40.1) des vorkonfektionierten Datenkabels (40) im Zuge einer Vormontage in den Innenraum (4, 73) des Anschlussgehäuses (2) hineinverlegt wird, und anschließend
- im Zuge einer Endmontage ein entgegengesetztes, zweites Ende (40.2) des vorkonfektionierten Datenkabels (40) in den Innenraum (73) der Datennutzer- oder Datenverteilerstelle (16) hineinverlegt wird.

6. Verwendung nach Anspruch 5, bei welcher ein Abschnitt (60) des vorkonfektionierten Datenkabels (40), der im Zuge der Endmontage zu der Datennutzer- oder Datenverteilerstelle (16) hin verlegt wird, zwischen der Vor- und der Endmontage in einem Hohlkörper (65) oberhalb des Anschlussgehäuses (2) aufbewahrt wird.

7. Verwendung nach einem der vorstehenden Ansprüche, bei welchem oberhalb des Anschlussgehäuses (2) ein Verkehrsleitkegel angeordnet ist oder wird.

8. Verwendung nach einem der vorstehenden Ansprüche, bei welcher die Datennutzer- oder Datenverteilerstelle (16) ein Gebäude (20) mit einem Gebäudeinnenraum und einer Gebäudewand ist.

9. Verwendung nach Anspruch 8, bei welcher das zumindest eine mit dem Steckerteil (44) ausgestattete Ende (40.2) des vorkonfektionierten Datenkabels (40) durch eine Öffnung (71) in der Gebäudewand in den Gebäudeinnenraum hineinverlegt wird und die Montagehilfseinrichtung (51) an der Gebäudewand befestigt wird.

10. Verwendung nach Anspruch 9, bei welcher zumindest ein Abschnitt (51.1) der Montagehilfseinrichtung (50, 51) in die Öffnung (71) eingeschoben und mit einem Verfüllmaterial (77) befestigt wird, das dazu in einem fließfähigen Zustand in die Öffnung (71) eingebracht wird und in der Öffnung (71) aushärtet.

11. Verwendung nach einem Ansprüche 1 bis 8, bei welcher das zumindest eine mit dem Steckerteil (43) ausgestattete Ende (40.1) des vorkonfektionierten Datenkabels (40) in den Innenraum (4) des Anschlussgehäuses (2) hineinverlegt wird und die Montagehilfseinrichtung (50) ein Fitting (61) aufweist, das an der Wand (51) des Anschlussgehäuses (2) befestigt wird.

12. Verwendung nach einem der vorstehenden Ansprüche, bei welcher der Steckerteil (43, 44), mit dem das vorkonfektionierte Datenkabel (40) an dem zumindest einen Ende (40.1, 40.2) ausgestattet ist, zumindest bei dem Hineinverlegen in den entsprechenden Innenraum (4, 73) in einer Schutzhülle (55, 56) angeordnet ist.

13. Verwendung nach einem der vorstehenden Ansprüche, bei welcher das vorkonfektionierte Datenkabel (40) mindestens zwei Glasfasern (41) aufweist, die an dem zumindest einen Ende (40.1, 40.2) jeweils mit einem Steckerteil (43, 44) ausgestattet sind, wobei diese Steckerteile (43, 44) in einer Längsrichtung (74) des Datenkabels (40) zueinander versetzt sind.

14. Verwendung nach einem der vorstehenden Ansprüche, bei welcher das vorkonfektionierte Datenkabel (40) an beiden einander entgegengesetzten Enden (40.1, 40.2) jeweils mit einem Steckerteil (43, 44) ausgestattet ist.

15. Verfahren zum Anbinden einer Datennutzer- oder Datenverteilerstelle (16) an ein Anschlussgehäuse (2) mittels eines Datenkabels (40), insbesondere gemäß einer Verwendung nach einem der vorstehenden Ansprüche,
wobei das Anschlussgehäuse (2)
- eine Wand (51) aufweist, die einen Innenraum (4) begrenzt, und
- in einen Boden (50) eingebaut ist,
und wobei die Datennutzer- oder Datenverteilerstelle (16)
- eine Wand (72) aufweist, die einen Innenraum (73) begrenzt, und wobei das Datenkabel (40) vorkonfektioniert ist, nämlich
- an zumindest einem Ende (40.1, 40.2) mit einem Steckerteil (43, 44) ausgestattet und
- mit einer Montagehilfseinrichtung (50, 51) versehen ist,
bei welchem Verfahren das vorkonfektionierte Datenkabel (40) an das Anschlussgehäuse (2) oder die Datennutzer- oder Datenverteilerstelle (16) angebunden wird, nämlich das zumindest eine mit dem Steckerteil (43, 44) ausgestattete Ende (40.1, 40.2) des Datenkabels (40) in den entsprechenden Innenraum (4, 73) hineinverlegt wird und die Montagehilfseinrichtung (50, 51) an der diesen Innenraum (4, 73) begrenzenden Wand (51, 72) befestigt wird.

16. Kabelanbindungseinheit mit einer Datennutzer- oder Datenverteilerstelle (16), einem Anschlussgehäuse (2) und einem Datenkabel (40),
wobei das Anschlussgehäuse (2)
- eine Wand (51) aufweist, die einen Innenraum (4) begrenzt, und
- in einen Boden (50) eingebaut ist,
und wobei die Datennutzer- oder Datenverteilerstelle (16)
- eine Wand (72) aufweist, die einen Innenraum (73) begrenzt, und wobei das Datenkabel (40) vorkonfektioniert ist, nämlich
- an zumindest einem Ende (40.1, 40.2) mit einem Steckerteil (43, 44) ausgestattet und
- mit einer Montagehilfseinrichtung (50, 51) versehen ist,
wobei das vorkonfektionierte Datenkabel (40) an das Anschlussgehäuse (2) oder die Datennutzer- oder Datenverteilerstelle (16) angebunden ist, nämlich ein dem zumindest einen Ende (40.1, 40.2), das mit dem Steckerelement 43, 44 ausgestattet ist, entgegengesetztes Ende (40.1, 40.2) des Datenkabels (40) in den entsprechenden Innenraum (4, 73) hineinverlegt ist, wobei das zumindest eine mit dem Steckerteil (43, 44) ausgestattete Ende (40.1, 40.2) des Datenkabels (40) noch frei ist, also noch außerhalb des anderen Innenraums (4, 73) angeordnet ist.
